# FASCICULE DE BREVET EUROPEEN

(11) **EP 3 084 187 B1**
(45) Date de publication et mention de la délivrance du brevet: **26.02.2020**
(21) Numéro de dépôt: 14827837.7
(22) Date de dépôt: 15.12.2014
(51) Int. Cl.: F02C 7/232

(54) **DISPOSITIF DE DRAINAGE DE FLUIDES POUR UN MOTEUR D'AÉRONEF**
FLÜSSIGKEITSABFLUSSVORRICHTUNG FÜR EIN FLUGZEUGTRIEBWERK
FLUID-DRAINING DEVICE FOR AN AIRCRAFT ENGINE

(30) Priorité: 19.12.2013 FR 1363087
(43) Date de publication de la demande: 26.10.2016
(73) Titulaire: Safran Helicopter Engines, 64510 Bordes (FR)
(72) Inventeur: PY, Jean-Michel, Pierre, Claude, F-64800 Pardies Pietat (FR); BENEZECH, Philippe, Jean, René, Marie, F-64160 Morlaas (FR); COMBEBIAS, Sébastien, F-64800 Asson (FR); FOUCHE, Sébastien, F-64240 Hasparren (FR); HERNANDEZ, Lorenzo, Huacan, F-64320 Bizanos (FR); LE BORGNE, Eric, F-64800 Igon (FR); NAPIAS, Lionel, F-64160 Sedze Maubecq (FR); QUAIREAU, Maxime, F-64420 Soumoulou (FR); ROGER, Philippe, 77550 Moissy-Cramayel (FR); ZORDAN, Cédric, F-64510 Narcastet (FR)
(74) Mandataire: Gevers & Orès
(86) Numéro de dépôt international: PCT/FR2014/053333
(87) Numéro de publication internationale: WO 2015/092243

(56) Documents cités:
- EP-A1- 2 626 616
- FR-A- 1 597 209
- US-A- 3 623 053

## Description

### DOMAINE TECHNIQUE

La présente invention concerne un dispositif de drainage de fluides pour un moteur d'aéronef, un moteur d'aéronef comportant un tel dispositif, ainsi qu'un procédé de contrôle de ce moteur.

### ETAT DE L'ART

L'état de la technique comporte notamment les documents FR-A-1 597 209, EP-A1-2 626 616 et US-A-3 623 053.

Dans les moteurs d'aéronef tel qu'un hélicoptère, il est souvent nécessaire d'évacuer des fluides de différentes natures, tels du carburant ou de l'huile, pour éviter que ces fluides ne s'accumulent et ne perturbent le fonctionnement de ces moteurs. Par exemple, certains moteurs nécessitent des opérations de purge qui entraînent des pertes de fluides (carburant, huile, etc.) qui doivent être récupérés et traités.

Dans la technique actuelle, un retour réservoir est prévu pour récupérer ces fluides, c'est-à-dire qu'au moins une canalisation est prévue pour acheminer les fluides jusqu'au réservoir de carburant de l'aéronef. Cependant, cette technologie présente de nombreux inconvénients. En effet, elle impose à l'avionneur de prévoir ce retour réservoir qui sert à la récupération des différents fluides drainés du moteur. Cette contrainte technique est accentuée par le fait que les débits et les températures de ces fluides peuvent être élevés. Les fuites peuvent aussi être la conséquence de pannes dites « dormantes ». En outre, l'huile qui est récupérée pollue le carburant stocké dans le réservoir. La prise en charge de ces fuites potentielles contraint donc fortement l'avionneur et ne facilite pas l'intégration du moteur sur les aéronefs ne comportant pas de retour réservoir.

Par ailleurs, des fuites d'huile ou de carburant peuvent se produire dans le moteur, suite à un défaut d'étanchéité de certaines pièces, sans pour autant que cela ait un impact sur le fonctionnement de ces pièces. Dans la technique actuelle, une opération de maintenance est réalisée dès que ce type de fuites, sans conséquence néfaste pour le moteur, est détecté, ce qui augmente la fréquence de ces opérations et le coût global de maintenance d'un moteur d'aéronef. C'est notamment le cas des systèmes hydromécaniques du type HMU dont l'étanchéité dynamique peut potentiellement générer des fuites externes. Les fuites de carburant au niveau du drain de la prise de mouvement sont la principale cause de dépose des blocs pompe/HMU, bien que ces fuites n'aient pas d'impact significatif sur le fonctionnement du moteur. Il serait donc souhaitable de pouvoir maintenir en service un système hydromécanique HMU dont l'étanchéité dynamique ne serait pas parfaite.

On connaît plusieurs solutions pour évacuer des fluides drainés d'un moteur d'aéronef, mais aucune de ces solutions ne répond efficacement et totalement au problème et au besoin évoqués ci-dessus. Une solution consiste par exemple à évacuer les fluides drainés vers un dalot du plancher moteur. Cette solution n'est pas satisfaisante car elle entraîne le rejet des fluides vers l'atmosphère ou sur la piste, ce qui est de moins en moins acceptable. Une autre solution consiste à équiper le moteur d'un dispositif de traitement du drainage des fluides, ce dispositif comprenant un collecteur configuré pour collecter les fluides drainés du moteur. Ce collecteur peut être relié par une canalisation à la tuyère d'échappement du moteur de façon à ce que les fluides drainés soient acheminés et pompés depuis le collecteur jusqu'à la tuyère pour y être brulés. Dans ce cas, des flammes et des fumées peuvent apparaître à la sortie de la tuyère, ce qui n'est pas esthétique en particulier lors du démarrage du moteur.

La présente invention a pour objet de remédier au problème et au besoin évoqués ci-dessus.

### EXPOSE DE L'INVENTION

La présente invention concerne un dispositif de drainage de fluides pour un moteur d'aéronef comprenant un collecteur configuré pour collecter des fluides drainés du moteur.

Selon l'invention, ce dispositif de drainage est remarquable en ce qu'il comporte des moyens de pompage des fluides contenus dans le collecteur et d'évacuation de ces fluides, et des moyens de surveillance configurés pour signaler une collecte anormale des fluides par le collecteur, ces moyens de surveillance étant configurés pour s'activer lorsque le débit de fluides collectés est supérieur au débit des moyens de pompage, ces moyens de surveillance comprenant une alarme électrique, qui est configurée pour émettre un signal destiné au poste de pilotage de l'aéronef.

Comme dans la technique antérieure, le collecteur récupère les différents fluides drainés (huile, carburant, etc.) provenant du moteur. Les moyens de pompage et d'évacuation permettent de pomper les fluides du collecteur pour les évacuer. Enfin, les moyens de surveillance permettent de surveiller le débit de fluides collectés et de détecter lorsque ce débit est anormal. Ce débit de fluides est anormal lorsqu'il est supérieur au débit des moyens de pompage. Le débit de pompage est donc de préférence réglé à une valeur seuil (de l'ordre de quelques litres par heure par exemple) correspondant à un fonctionnement normal du moteur, c'est-à-dire à un fonctionnement pour lequel les pertes et fuites de fluides susceptibles d'avoir lieu n'affectent pas le fonctionnement du moteur (c'est-à-dire, en dehors des cas de panne moteur). Autrement dit, en fonctionnement normal, les moyens de pompage évacuent tous les fluides collectés dans le collecteur, lorsque ces moyens de pompage sont actifs. Au contraire, en cas de dysfonctionnement et de fuites importantes de fluides, c'est-à-dire en cas de panne moteur, le débit des moyens de pompage devient insuffisant pour évacuer les fluides collectés dans le collecteur. Les moyens de surveillance sont alors configurés pour s'activer et ainsi détecter cette situation anormale. Une opération de maintenance du moteur peut alors être réalisée. Les moyens de surveillance du dispositif selon l'invention permettent ainsi de limiter les opérations de maintenance aux seuls cas où des fuites importantes de fluides drainés sont détectées, ce qui est particulièrement avantageux notamment en termes de coût de maintenance du moteur. Les moyens de surveillance permettent ainsi d'éviter des déposes prématurées d'équipements du moteur et minimise les inspections périodiques de la technique antérieure.

Le dispositif de drainage selon l'invention minimise l'interface avec l'avionneur et contribue à la suppression de l'exigence d'un retour réservoir. Avantageusement, le dispositif de drainage est ainsi dépourvu de retour réservoir.

Selon un mode particulier de réalisation de l'invention, les moyens de pompage comprennent une pompe électrique, mécanique ou pneumatique.

En variante, les moyens de pompage peuvent comprendre un éjecteur du type trompe à jet. Cet éjecteur peut comporter un premier conduit de passage de fluides drainés dont une extrémité forme une entrée des fluides contenus dans le collecteur et dont l'autre extrémité forme une sortie d'évacuation des fluides, et un second conduit de pulvérisation de gaz sous pression qui s'étend autour ou à l'intérieur du premier conduit et qui est configuré pour que le gaz pulvérisé sortant de ce second conduit force l'évacuation des fluides par la sortie du premier conduit.

Le premier conduit peut être relié à une vanne, par exemple à clapet. Dans un mode de réalisation, cette vanne est commandée électriquement ou mécaniquement. En variante, elle peut être commandée par un fluide sous pression, la vanne étant fermée lorsque la pression du fluide est inférieure à un certain seuil et ouverte lorsque cette pression est supérieure à ce seuil. La vanne permet ainsi de contrôler la circulation des fluides drainés dans le premier conduit. Ceci peut permettre de contrôler avec précision le moment d'évacuation des fluides drainés, afin que ceux-ci ne le soient pas à l'allumage du moteur par exemple.

Le second conduit de l'éjecteur peut comprendre une entrée de gaz qui est reliée à des moyens de prélèvement de gaz sous pression, par exemple d'un compresseur du moteur. L'entrée de gaz du second conduit de l'éjecteur peut être reliée aux moyens de prélèvement par une vanne, par exemple à clapet, ou une restriction de section de passage. Cette vanne peut être électrique, mécanique ou pneumatique (commandée par un fluide sous pression). La vanne peut être commandée par le gaz sous pression prélevé. Dans ce cas, comme expliqué dans ce qui précède, elle peut être fermée lorsque la pression du gaz est inférieure à un certain seuil et ouverte lorsque cette pression est supérieure à ce seuil. Ceci est particulièrement avantageux car la vanne à clapet fonctionne alors de manière autonome, les gaz sous pression alimentant le second conduit de l'éjecteur lorsque leur pression est suffisante pour ouvrir la vanne à clapet. La vanne à clapet peut être configurée pour s'ouvrir lorsque l'aéronef est en vol et que le moteur est en régime de croisière par exemple.

Selon un mode de réalisation, les moyens de pompage sont intégrés au collecteur. Autrement dit, les moyens de pompage sont montés dans ou sur le collecteur, ce qui diminue l'encombrement du dispositif. Dans le cas où les moyens de pompage comprennent un éjecteur du type précité, le second conduit de cet éjecteur peut être monté dans le collecteur au niveau d'une sortie de fluides drainés de ce dernier, qui forme alors le premier conduit de l'éjecteur. En variante, les moyens de pompage sont situés à distance du collecteur et reliés par une conduite à une sortie de fluides de celui-ci.

Il est décrit des moyens de surveillance comprenant une alarme visuelle et/ou électrique, qui est configurée pour être visible par un opérateur contrôlant le collecteur ou pour émettre un signal destiné au poste de pilotage de l'aéronef. L'alarme est déclenchée lorsque le débit de remplissage du collecteur est supérieur au débit des moyens de pompage. Elle permet de signaler toute fuite anormale du moteur, comme expliqué dans ce qui précède. Il est également décrit des moyens de surveillance pouvant comprendre un trou ou une fenêtre de regard équipant le collecteur. Un opérateur peut ainsi vérifier le niveau ou le volume de fluides dans le collecteur et décider de réaliser ou non une opération de maintenance. Il est aussi possible de surveiller plusieurs seuils de débit pour voir l'évolution d'une panne et programmer une révision.

Il est également décrit des moyens de surveillance du collecteur comprenant un trop-plein configuré pour laisser s'échapper des fluides du collecteur lorsque le débit de fluides collectés est supérieur au débit des moyens de pompage. Les écoulements externes d'huile ou de carburant sont ainsi supprimés hors cas de panne. Dans le cas où un tel écoulement interviendrait, un opérateur pourrait facilement constater, par les traces de coulure au niveau du trop-plein par exemple, que le collecteur a reçu un débit de fluides trop important. Il pourrait alors décider de réaliser une opération de maintenance.

L'invention se rapporte également à un moteur d'aéronef, comprenant une tuyère d'échappement de gaz de combustion. Le moteur est remarquable en ce qu'il comprend au moins un dispositif de drainage selon l'invention, la sortie des moyens de pompage débouchant directement ou par l'intermédiaire d'une conduite à l'intérieur de la tuyère.

Les fluides drainés qui sont évacués du collecteur sont ainsi acheminés jusqu'à la tuyère d'échappement du moteur, pour y être brûlés. Comme expliqué dans ce qui précède, le moment où les fluides drainés sont évacués peut être déterminé à l'avance, par exemple au moyen d'une vanne à clapet reliée au premier ou au second conduit d'un éjecteur du type trompe à jet formant des moyens de pompage. Il est ainsi envisageable d'évacuer les fluides drainés dans la tuyère uniquement lorsque l'aéronef est en vol, pour minimiser les nuisances externes.

Avantageusement, les moyens de pompage sont reliés à des moyens de prélèvement de gaz d'un compresseur ou d'un système de dégazage du moteur.

L'invention se rapporte encore à un aéronef muni d'un dispositif de drainage selon l'invention.

L'invention se rapporte également à un procédé de contrôle d'un moteur, le procédé comprenant une étape de maintenance du moteur après l'activation des moyens de surveillance du dispositif.

### BREVE DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
La figure 1 illustre schématiquement une vue de côté d'un moteur d'aéronef comprenant un dispositif de drainage selon l'invention.
La figure 2 illustre schématiquement une vue de côté d'un premier mode de réalisation d'un dispositif de drainage selon l'invention.
Les figures 3 à 10 illustrent schématiquement des vues de côté de variantes de réalisation du dispositif de drainage selon l'invention.

### DESCRIPTION DETAILLEE

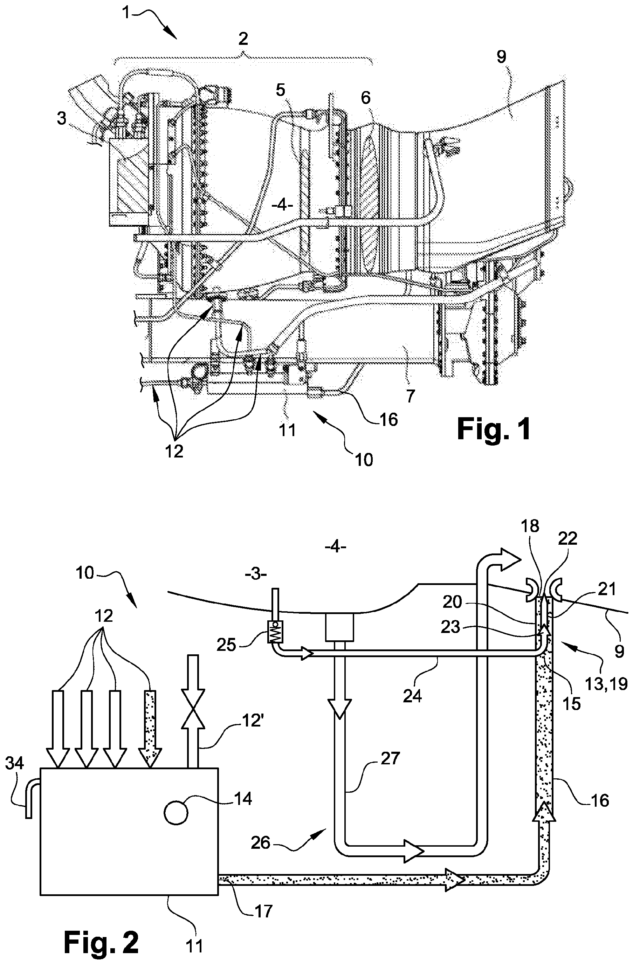

En référence à la vue latérale de la figure 1, un moteur d'aéronef 1 (ici d'un hélicoptère) comporte (vus en transparence) un générateur de gaz 2, formé d'un compresseur 3, d'une chambre de combustion 4 et d'une turbine 5, en liaison avec une turbine libre 6. La turbine libre 6 entraîne le rotor principal (non représenté) par un arbre de puissance 7 via une boîte de transmission (non représentée). Les gaz issus de la combustion sont éjectés dans une tuyère d'échappement 9.

Afin de rendre le moteur propre, le moteur 1 est équipé d'un dispositif de drainage 10 qui est destiné à collecter les fluides résiduels (carburant, huile, condensats d'eau, impuretés, etc.) provenant du moteur.

De façon classique, un dispositif de drainage 10 comprend un collecteur 11 et des conduits 12 de drainage de fluides provenant de différentes parties du moteur et ayant leurs sorties débouchant dans le collecteur 11.

Un dispositif de drainage de fluides selon l'invention comprend en outre des moyens de pompage des fluides contenus dans le collecteur 11 et d'évacuation de ces fluides, ainsi que des moyens de surveillance configurés pour signaler une collecte anormale des fluides par le collecteur 11.

La figure 2 représente un premier mode de réalisation du dispositif de drainage 10 selon l'invention, dans lequel les moyens de pompage et d'évacuation et les moyens de surveillance sont désignés respectivement par les références 13 et 14.

Dans l'exemple représenté, les moyens de pompage et d'évacuation 13 comprennent une entrée 15 reliée par une conduite 16 à une sortie 17 de fluides du collecteur 11, et une sortie 18 débouchant dans la tuyère d'échappement 9 du moteur 1. Le collecteur 11 reçoit les fluides drainés provenant des conduits 12 (schématiquement représentés par des flèches) et est de préférence équipé d'un évent 12' pour la mise à l'air libre de la cavité interne du collecteur, dans laquelle sont reçus les fluides.

Les moyens de pompage et d'évacuation 13 comprennent ici un éjecteur 19 du type trompe à jet, muni d'un premier conduit 20 de passage de fluides drainés dont une extrémité (amont) forme l'entrée 15 précitée et dont l'autre extrémité (aval) forme la sortie 18 précitée. Comme cela est schématiquement représenté en figure 1, cette sortie 18 peut comprendre une restriction de sa section de passage de façon à définir en aval un diffuseur.

Les moyens de pompage et d'évacuation 13 comprennent aussi un second conduit 21 de pulvérisation de gaz sous pression qui s'étend ici à l'intérieur du premier conduit 20 et qui est configuré pour que le gaz pulvérisé sortant de ce second conduit 21 force l'évacuation des fluides circulant dans le conduit 20 vers sa sortie 18 et dans la tuyère 9. Ce gaz sous pression est destiné à se détendre dans le diffuseur précité, ce qui crée une dépression et force le passage des fluides drainés jusque dans la tuyère 9.

Le second conduit 21 comprend ainsi une sortie 22 de gaz sous pression située au voisinage de la sortie 18 du premier conduit 20. L'entrée 23 du second conduit est reliée par une conduite 24 à des moyens de prélèvement de gaz sous pression dans le moteur 1 (non représentés sur le dessin). Le prélèvement de gaz sous pression peut être réalisé dans le compresseur 3 du moteur, par exemple au niveau du plan P25 ou P3 (le plan P25 étant situé entre deux roues de compression et le plan P3 étant situé en aval de ces roues).

Pour contrôler l'activation du pompage et le moment d'évacuation des fluides dans la tuyère 9, la conduite 24 est équipée d'une vanne à clapet 25 qui est destinée à s'ouvrir et à laisser passer le gaz sous pression prélevé dans la conduite jusqu'à l'éjecteur 19 lorsque la pression de ce gaz est supérieure ou égale à une valeur seuil prédéterminée. La vanne à clapet 25 est ici représentée par une bille mobile sollicitée par un ressort de compression contre un siège entourant une sortie de gaz des moyens de prélèvement. Ainsi, la vanne à clapet 25 est actionnée par le gaz sous pression. La valeur seuil précitée de la pression de gaz, qui est notamment fonction de la raideur du ressort dans l'exemple précité, est de préférence déterminée pour contrôler avec précision le moment d'évacuation des fluides drainés, afin notamment qu'il ne se produise pas dès l'allumage du moteur.

Les moyens de surveillance 14 du collecteur 11 sont ici représentés par un simple trop-plein 34. Selon l'invention, ces moyens de surveillance 14 sont configurés pour s'activer lorsque le débit de fluides reçu par le collecteur 11 est supérieur au débit des moyens de pompage 13 (éjecteur 19). Les moyens de surveillance 14 permettent ainsi de signaler une collecte anormale des fluides par le collecteur 11, notamment une quantité trop élevée par rapport à la quantité usuelle de fluides drainés en fonctionnement normal du moteur.

Lorsque le débit des fluides collectés est supérieur au débit des moyens de pompage 13, les moyens de surveillance 14 peuvent être conçus pour émettre un signal, qui peut être une alarme visuelle et/ou électrique.

En réglant le débit de pompage à une valeur seuil correspondant à un fonctionnement normal du moteur, c'est-à-dire à un fonctionnement pour lequel les pertes et fuites de fluides susceptibles d'apparaître n'affectent pas le fonctionnement du moteur, les moyens de pompage 13 ne sont plus à même d'évacuer les fluides collectés dès lors que le débit de fluides collectés est supérieur au débit de pompage. Dans le cas où le collecteur l'y autorise, le niveau de fluides dans le collecteur 11 va donc augmenter en cas de panne moteur.

Dans le cas où le collecteur 11 comprend un hublot à travers lequel un opérateur peut voir le niveau de fluides dans le collecteur, les moyens de surveillance 14 comprennent ce hublot qui est ainsi destiné à alerter l'opérateur (alarme visuelle).

Le collecteur 11 peut comprendre en variante ou en caractéristique additionnelle un trop-plein 34 destiné à laisser s'échapper des fluides du collecteur 11, en particulier lorsque le volume de fluides collectés est supérieur au volume de rétention des fluides du collecteur 11. Un opérateur peut voir, à la place ou en plus des moyens d'alarme, les traces de coulure générées par un débordement au niveau du trop-plein 34 dans le cas où une panne moteur est intervenue, le trop-plein 34 formant ainsi un autre type d'alarme visuelle. Le trop plein 34 peut être raccordé par un tuyau au dalot du plancher du compartiment moteur, ou à un réservoir auxiliaire de récupération.

En tant qu'alarme électrique et visuelle, les moyens de surveillance 14 peuvent comprendre un capteur destiné à détecter le niveau de fluides dans le collecteur 11 et à émettre un signal à destination du poste de pilotage de l'aéronef qui peut être visible par le pilote par l'intermédiaire d'un voyant lumineux par exemple.

Les moyens de surveillance 14 permettent ainsi de détecter une fuite importante et anormale de fluides suffisamment rapidement pour alerter un opérateur ou le pilote de l'aéronef. L'activation de l'alarme indique qu'une panne moteur est intervenue et qu'une opération de maintenance doit être réalisée.

Bien que ne faisant pas partie de l'invention, le moteur partiellement représenté en figure 2 comprend d'autres moyens de drainage 26 qui sont ici utilisés pour collecter du carburant non brûlé dans la chambre de combustion 4 et pour l'évacuer vers la tuyère 9 au moyen d'une conduite 27 dont la sortie débouche dans la tuyère. Le dispositif de drainage 10 selon l'invention est indépendant de ces moyens de drainage 26 qui ne sont pas équipés de moyens de pompage ni de moyens de surveillance.

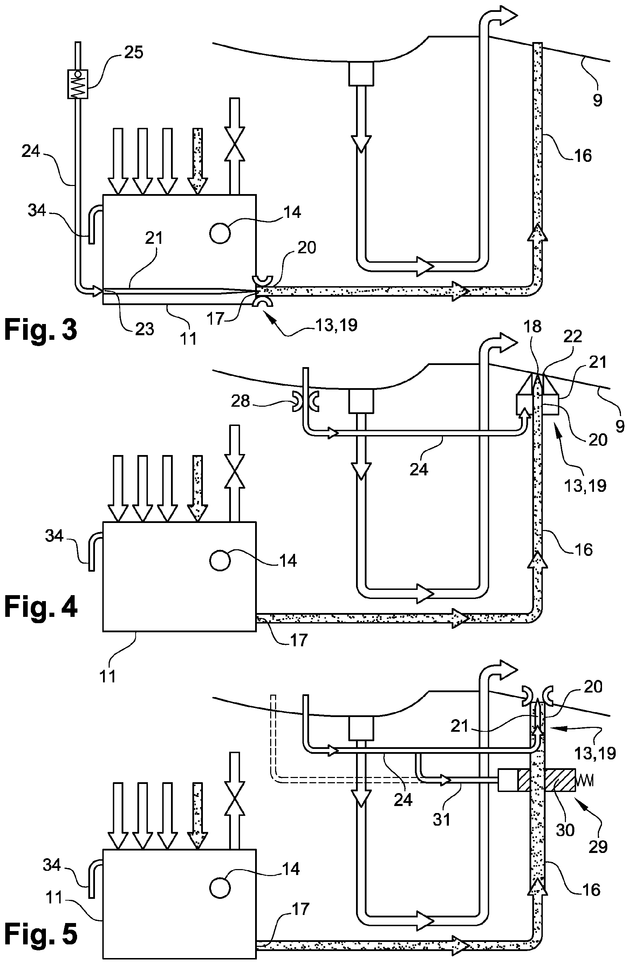

Les figures 3 à 10 représentent des variantes de réalisation de l'invention, dans lesquelles les éléments déjà décrits dans ce qui précède sont désignés par les mêmes références.

Dans la variante de la figure 3, les moyens de pompage 13 (éjecteur 19) sont intégrés au collecteur 11. Le premier conduit 20 est directement monté à la sortie 17 de fluides du collecteur 11 et est reliée à une extrémité d'une conduite 16 dont l'autre extrémité débouche dans la tuyère 9. Le second conduit 21 de l'éjecteur 19 s'étend à l'intérieur du premier conduit 20 et son entrée 23 est reliée par une conduite 24 pouvant être équipée d'une vanne à clapet 25 aux moyens de prélèvement de gaz sous pression dans le moteur 1.

Le dispositif de drainage de la figure 3 comprend également des moyens de surveillance 14 du type précité.

Le fonctionnement de ce dispositif est similaire à celui de la figure 2.

Dans le mode de réalisation de la figure 4, les moyens de pompage 13 comprennent un éjecteur 19 dont le premier conduit 20 est monté à l'intérieur du second conduit 21, de façon à former une buse. L'entrée du premier conduit 20 est reliée par la conduite 16 à la sortie 17 de fluides du collecteur 11. Le second conduit 21 a son entrée reliée par une conduite 24 aux moyens de prélèvement d'air et sa sortie s'étend autour de la sortie du premier conduit 20 et débouche dans la tuyère 9.

L'éjecteur 19 fonctionne ici comme une buse d'éjection de type pistolet à peinture, qui fonctionne en expulsant le gaz sous pression autour de la sortie 18 du premier conduit 20, afin d'aspirer vers la tuyère 9, les fluides provenant du collecteur 11.

Par ailleurs, la conduite 24 reliant le second conduit 21 de l'éjecteur aux moyens de prélèvement, est équipée d'une restriction 28 de sa section de passage (à la place de la vanne à clapet 25 de la figure 2). Cette restriction 28 permet de retarder l'évacuation des fluides pour qu'elle n'intervienne pas au démarrage du moteur. Ainsi, la pression augmente légèrement dans le second conduit 21 de l'éjecteur au démarrage, l'évacuation des fluides dans la tuyère 9 se produisant au-delà d'un seuil de pression prédéterminé.

Le dispositif de drainage comprend également des moyens de surveillance 14 du type précité.

La variante de réalisation de la figure 5 diffère du mode de réalisation de la figure 2 essentiellement en ce que la conduite 24 n'est pas équipée d'une vanne à clapet ni de restriction. A la place, une vanne 29, par exemple à tiroir, est montée sur la conduite 16 qui relie la sortie 17 du collecteur 11 à l'entrée du premier conduit 20 de l'éjecteur 19.

La vanne 29 comprend une entrée reliée par une portion de conduite 16 à la sortie 17 du collecteur 11 et une sortie reliée par une autre portion de conduite 16 à l'entrée du premier conduit 20 de l'éjecteur 19. La vanne 29 comprend en outre un organe interne 30 mobile entre une position de fermeture de la sortie et/ou de l'entrée précitées de la vanne 29, et une position dans laquelle l'entrée et la sortie de la vanne 29 sont en communication fluidique. L'organe 30 est sollicité par un ressort dans la position de fermeture de la vanne 29. Le déplacement de cet organe 30 est commandé par du gaz sous pression, qui est ici une partie du gaz sous pression prélevé sur le moteur par les moyens de prélèvement précités. Pour cela, la conduite 24 reliant les moyens de prélèvement à l'éjecteur 19 peut comprendre une dérivation 31 reliée à une cavité de la vanne 29, dans laquelle l'organe est monté mobile. La vanne 29 est destinée à s'ouvrir lorsque la pression de gaz prélevé est supérieure ou égale à une valeur seuil prédéterminée, qui est notamment fonction de la raideur du ressort dans l'exemple précité, et qui est de préférence déterminée pour contrôler avec précision le moment d'évacuation des fluides drainés, afin notamment qu'il ne se produise pas dès l'allumage du moteur.

En variante et comme représenté en traits pointillés en figure 5, la conduite 31 peut être reliée par son extrémité opposée à la vanne à des moyens de prélèvement d'air dans le compresseur du moteur.

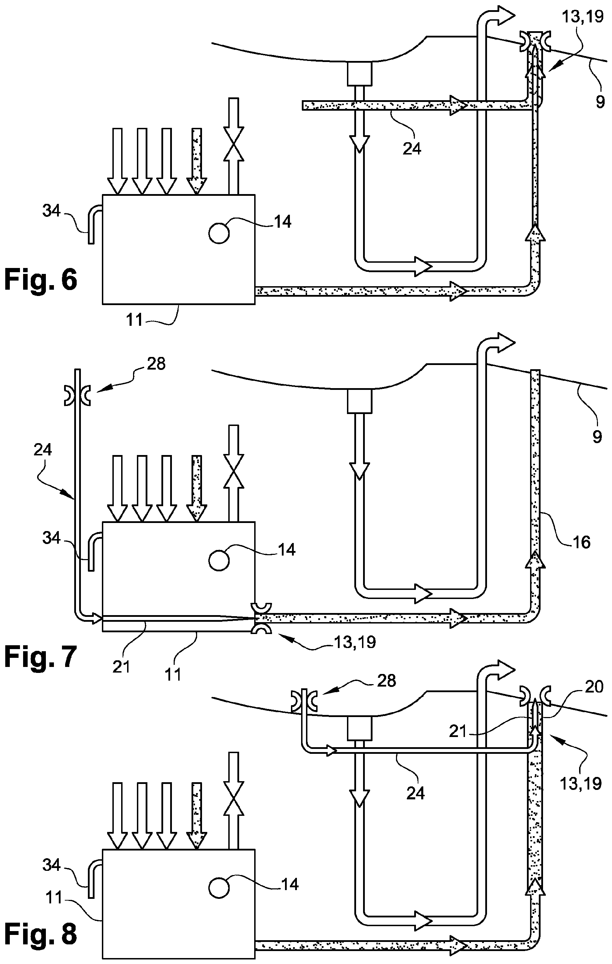

La variante de réalisation de la figure 6 diffère du mode de réalisation de la figure 2 essentiellement en ce que la conduite 24 est reliée à des moyens de prélèvement de gaz sous pression, non pas dans le compresseur du moteur, mais dans un système de dégazage (non représenté) du moteur. Ainsi, l'évacuation des fluides dans la tuyère 9 se produit à l'aide du système de dégazage du moteur.

La variante de réalisation de la figure 7 diffère du mode de réalisation de la figure 3 essentiellement en ce que la conduite 24 reliant le second conduit 21 de l'éjecteur aux moyens de prélèvement, est équipée d'une restriction 28 de sa section de passage (à la place de la vanne à clapet 25 de la figure 3). Cette restriction 28 a la même fonction que la restriction décrite en référence à la figure 4.

La variante de réalisation de la figure 8 diffère du mode de réalisation de la figure 2 essentiellement en ce que la conduite 24 reliant le second conduit 21 de l'éjecteur aux moyens de prélèvement, est équipée d'une restriction 28 de sa section de passage (à la place de la vanne à clapet 25 de la figure 2). Cette restriction 28 a la même fonction que la restriction décrite en référence à la figure 4.

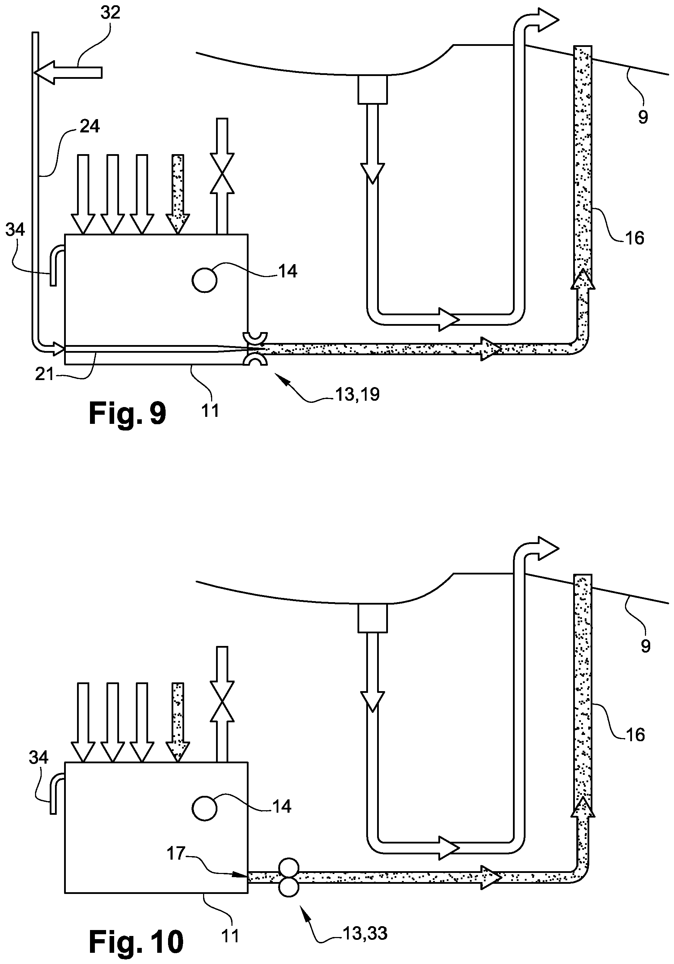

La variante de réalisation de la figure 9 diffère du mode de réalisation de la figure 3 essentiellement en ce que la conduite 24 reliant le second conduit 21 de l'éjecteur 19 aux moyens de prélèvement, est équipée d'une vanne 32 commandée électriquement (à la place de la vanne à clapet 25 de la figure 3). Cette vanne 32 est destinée à s'ouvrir pour laisser passer le gaz sous pression prélevé lorsqu'elle est activée par un ordre envoyé par un calculateur moteur par exemple.

Dans la variante de réalisation de la figure 10, les moyens de pompage 13 du dispositif de drainage comprennent une pompe 33 électrique ou mécanique montée sur la conduite 16 et dont une extrémité est reliée à la sortie 17 du collecteur 11 et l'extrémité opposée débouche dans la tuyère 9. Cette pompe 33 amène les fluides du collecteur 11 vers la tuyère 9, lorsqu'elle est actionnée. Le débit de cette pompe est aussi calibré de manière à fixer un seuil de débit au-delà duquel le dispositif de surveillance signale un fonctionnement anormal du moteur. Cette variante ne nécessite pas de vanne, de restriction ni de prélèvement d'air. Le dispositif de drainage comprend également des moyens de surveillance 14 du type précité.

## Revendications

1. Dispositif (10) de drainage de fluides pour un moteur (1) d'aéronef, comprenant un collecteur (11) configuré pour collecter des fluides drainés du moteur, **caractérisé en ce qu'**il comporte des moyens de pompage (13) des fluides contenus dans le collecteur et d'évacuation de ces fluides, et des moyens de surveillance (14) configurés pour signaler une collecte anormale des fluides par le collecteur (11), ces moyens de surveillance (14) étant configurés pour s'activer lorsque le débit de fluides collectés est supérieur au débit des moyens de pompage (13), ces moyens de surveillance (14) comprenant une alarme électrique, qui est configurée pour émettre un signal destiné au poste de pilotage de l'aéronef.

2. Dispositif (10) selon la revendication 1, dans lequel les moyens de pompage (13) comprennent une pompe (33) électrique, mécanique ou pneumatique, ou un éjecteur (19) du type trompe à jet, cet éjecteur comportant un premier conduit (20) de passage de fluides drainés dont une extrémité forme une entrée (15) des fluides contenus dans le collecteur (11) et dont l'autre extrémité forme une sortie (18) d'évacuation des fluides, et un second conduit (21) de pulvérisation de gaz sous pression qui s'étend autour ou à l'intérieur du premier conduit (20) et qui est configuré pour que le gaz pulvérisé sortant de ce second conduit (21) force l'évacuation des fluides par la sortie du premier conduit (20).

3. Dispositif (10) selon la revendication 2, dans lequel le premier conduit (20) est relié à une vanne (29).

4. Dispositif (10) selon la revendication 2 ou 3, dans lequel le second conduit (21) comprend une entrée (23) de gaz qui est reliée à des moyens de prélèvement de gaz sous pression, éventuellement par l'intermédiaire d'une vanne (25) ou d'une restriction (28) de section de passage.

5. Dispositif (10) selon l'une des revendications précédentes, dans lequel les moyens de pompage (13) sont intégrés au collecteur (11) ou sont situés à distance du collecteur et reliés par une conduite (16) à une sortie (17) de fluides de celui-ci.

6. Dispositif (10) selon l'une quelconque des revendications précédentes, dans lequel le collecteur (11) comprend un trop-plein (34) configuré pour laisser s'échapper des fluides du collecteur (11) lorsque le débit de fluides collectés est supérieur au débit des moyens de pompage (13).

7. Moteur (1) d'aéronef, comprenant une tuyère d'échappement (9) des gaz de combustion, **caractérisé en ce qu'**il comprend au moins un dispositif (10) selon l'une quelconque des revendications précédentes, la sortie de moyens de pompage (13) débouchant directement ou par l'intermédiaire d'une conduite (16) à l'intérieur de la tuyère (9).

8. Moteur (1) selon la revendication 7 en dépendance de la revendication 4, **caractérisé en ce que** les moyens de pompage (13) sont reliés à des moyens de prélèvement de gaz d'un compresseur ou d'un système de dégazage du moteur.

9. Procédé de contrôle d'un moteur selon la revendication 7 ou 8, **caractérisé en ce qu'**il comprend une étape de maintenance du moteur (1) après l'activation des moyens de surveillance (14) du dispositif (10).

## Patentansprüche

1. Vorrichtung (10) zur Ableitung von Fluiden für ein Luftfahrzeugtriebwerk (1), die einen Sammler (11) umfasst, der konfiguriert ist, um Fluide zu sammeln, die aus dem Triebwerk ableiten, **dadurch gekennzeichnet, dass** sie Mittel (13) zum Pumpen der Fluide, die in dem Sammler enthalten sind, und zum Ableiten dieser Fluide umfasst, sowie Überwachungsmittel (14), die konfiguriert sind, um ein anormales Sammeln der Fluide durch den Sammler (11) zu melden, wobei diese Überwachungsmittel (14) konfiguriert sind, um sich zu aktivieren, wenn der Durchfluss an gesammelten Fluiden größer ist als der Durchfluss der Pumpmittel (13), wobei diese Überwachungsmittel (14) einen elektrischen Alarm umfassen, der konfiguriert ist, um ein Signal zu senden, das für das Cockpit des Luftfahrzeugs bestimmt ist.

2. Vorrichtung (10) nach Anspruch 1, wobei die Pumpmittel (13) eine elektrische, mechanische oder pneumatische Pumpe (33) oder einen Ejektor (19) vom Typ Strahlpumpe umfassen, wobei dieser Ejektor eine erste Leitung (20) zum Durchgang abgeflossener Fluide umfasst, von der ein Ende einen Eingang (15) der Fluide, die in dem Sammler (11) enthalten sind, bildet, und von der das andere Ende den Ausgang (18) zum Ableiten der Fluide bildet, eine zweite Leitung (21) zum Zerstäuben von Gas unter Druck, das sich um die erste Leitung (20) oder in ihrem Inneren ausbreitet, und die konfiguriert ist, damit das zerstäubte Gas, das aus dieser zweiten Leitung (21) austritt, das Ableiten der Fluide durch den Ausgang der ersten Leitung (20) forciert.

3. Vorrichtung (10) nach Anspruch 2, wobei die erste Leitung (20) mit einem Schieber (29) verbunden ist.

4. Vorrichtung (10) nach Anspruch 2 oder 3, wobei die zweite Leitung (21) einen Gaseingang (23) umfasst, der mit Entnahmemitteln von Gas unter Druck verbunden ist, eventuell über einen Schieber (25) oder eine Durchgangsquerschnitteinschnürung (28).

5. Vorrichtung (10) nach einem der vorstehenden Ansprüche, wobei die Pumpmittel (13) in den Sammler (11) integriert sind oder von dem Sammler entfernt liegen und durch eine Leitung (16) mit seinem Ausgang (17) von Fluiden verbunden sind.

6. Vorrichtung (10) nach einem der vorstehenden Ansprüche, wobei der Sammler (11) einen Überlauf (34) umfasst, der konfiguriert ist, um Fluide aus dem Sammler (11) austreten zu lassen, wenn der Durchsatz an gesammelten Fluiden größer ist als der Durchsatz der Pumpmittel (13).

7. Luftfahrzeugtriebwerk (1), das ein Abgasstrahlrohr (9) der Verbrennungsgase umfasst, **dadurch gekennzeichnet, dass** es mindestens eine Vorrichtung (10) nach einem der vorstehenden Ansprüche umfasst, wobei der Ausgang der Pumpmittel (13) direkt oder über eine Leitung (16) in das Innere des Strahlrohrs (9) mündet.

8. Triebwerk (1) nach Anspruch 7 in Abhängigkeit von Anspruch 4, **dadurch gekennzeichnet, dass** die Pumpmittel (13) mit Mitteln zur Gasentnahme eines Verdichters oder eines Entgasungssystems des Triebwerks verbunden sind.

9. Steuerverfahren eines Triebwerks nach Anspruch 7 oder 8, **dadurch gekennzeichnet, dass** es einen Wartungsschritt des Triebwerks (1) nach dem Aktivieren der Überwachungsmittel (14) der Vorrichtung (10) umfasst.

## Claims

1. Device (10) for draining liquids for an aircraft engine (1), comprising a collector (11) designed to collect liquids drained from the engine, **characterised in that** said device comprises means (13) for pumping the liquids held in the collector and for discharging said liquids, and monitoring means (14) designed to indicate when the liquids have been collected by the collector (11) in an anomalous manner, said monitoring means (14) being designed to be activated when the flow rate of collected liquids is greater than the delivery of the pumping means (13), wherein the monitoring means (14) comprise an electrical alarm designed to emit a signal intended for the cockpit of the aircraft.

2. Device (10) according to claim 1, wherein the pumping means (13) comprise an electric, mechanical or pneumatic pump (33), or a jet pump ejector (19), this ejector comprising a first line (20) for the flow of drained liquids, one end of which forms an inlet (15) for the liquids held in the collector (11) and the other end of which forms an outlet (18) for discharging the liquids, and a second line (21) for atomising pressurised gas, which line extends around or inside the first line (20) and is designed so that the atomised gas leaving said second line (21) forces the liquids to be discharged through the outlet of the first line (20).

3. Device (10) according to claim 2, wherein the first line (20) is connected to a valve (29).

4. Device (10) according to either claim 2 or claim 3, wherein the second line (21) comprises a gas inlet (23) that is connected to means for bleeding pressurised gas, possibly by means of a valve (25) or a constriction (28) of the flow cross-section.

5. Device (10) according to any of the preceding claims, wherein the pumping means (13) are incorporated in the collector (11) or are located at a distance from the collector and connected to a liquid outlet (17) thereof by means of a conduit (16).

6. Device (10) according to any of the preceding claims, wherein the collector (11) comprises an overflow (34) designed to let liquids escape from the collector (11) when the flow of collected liquids is greater than the delivery of the pumping means (13).

7. Aircraft engine (1), comprising an exhaust nozzle (9) for the combustion gases, **characterised in that** said engine comprises at least one device (10) according to any of the preceding claims, the outlet of the pumping means (13) leading into the jet nozzle (9) directly or by means of a conduit (16).

8. Engine (1) according to claim 7 as dependent on claim 4, **characterised in that** the pumping means (13) are connected to means for bleeding gas from a compressor or from a system for removing gas from the engine.

9. Method for inspecting an engine according to either claim 7 or claim 8, **characterised in that** said method comprises a step of maintaining the engine (1) after the means (14) for monitoring the device (10) have been activated.
